# FASCICULE DE BREVET EUROPEEN

(11) **EP 4 489 428 B1**
(45) Date de publication et mention de la délivrance du brevet: **07.10.2026**
(21) Numéro de dépôt: 24178832.2
(22) Date de dépôt: 29.05.2024
(51) Int. Cl.: H04R 1/02, H04R 1/28, H04N 21/426

(54) **EQUIPEMENT ELECTRIQUE INTEGRANT UN HAUT-PARLEUR**
ELEKTRISCHE VORRICHTUNG MIT LAUTSPRECHER
ELECTRICAL EQUIPMENT INCORPORATING A LOUDSPEAKER

(30) Priorité: 13.06.2023 FR 2305999
(43) Date de publication de la demande: 08.01.2025
(73) Titulaire: Sagemcom Broadband SAS, 92270 Bois-Colombes (FR)
(72) Inventeur: CHUSSEAU, Hugo, 92270 BOIS-COLOMBES (FR)
(74) Mandataire: Cabinet Boettcher

(56) Documents cités:
- CN-A- 109 951 751
- CN-U- 212 909 904
- US-A1- 2012 128 196
- US-A1- 2017 048 364
- US-A1- 2017 076 658
- US-A1- 2020 304 892
- VILLEMIN GÉRARD: "Carré inscrit dans un carré", 1 November 2023 (2023-11-01), XP093297792, Retrieved from the Internet <URL:http://villemin.gerard.free.fr/GeomLAV/Carre/CarInscr.htm>

## Description

L'invention concerne le domaine des équipements électriques intégrant un haut-parleur.

### ARRIERE PLAN DE L'INVENTION

Un boîtier décodeur ou STB (de l'anglais « Set Top Box) est un équipement électrique destiné à être connecté à un téléviseur et utilisé pour diverses fonctions et différents services comme la télévision numérique.

Un boîtier décodeur comprend généralement un châssis surmonté d'un capot, le châssis et le capot délimitant une enceinte dans laquelle est disposée une carte mère s'étendant sensiblement horizontalement.

On connaît des boîtiers décodeurs équipés d'un microphone et d'un haut-parleur reliés à la carte mère pour assurer la fonction d'assistant vocal. Le haut-parleur est généralement agencé sous la carte mère de sorte que la hauteur d'un boîtier décodeur équipé d'un assistant vocal est supérieure à celle d'un boîtier décodeur dépourvu d'assistant vocal.

Le haut-parleur est agencé en regard d'une ouverture ménagée sur le châssis ou un flanc du capot, de sorte que le haut-parleur est respectivement orienté vers le bas ou vers le côté. Lorsque le haut-parleur est orienté vers le bas, il est nécessaire d'augmenter la hauteur des pieds sur lesquels repose le boîtier décodeur et/ou de ménager un décaissement sur la face inférieure du châssis de manière à garantir une propagation suffisante des ondes sonores générées par le haut-parleur. Dès lors, cette orientation vers le bas influe là aussi de manière significative sur la hauteur mais aussi sur le volume d'encombrement général du boîtier décodeur.

Les documents US 2017/0076658 A1 et CN 109951751 A présentent des exemples connus de boîtiers décodeurs pourvus d'un haut-parleur.

### OBJET DE L'INVENTION

L'invention a pour objet de proposer un agencement d'un haut-parleur dans un équipement électrique permettant de limiter les dimensions de l'équipement électrique, et notamment sa hauteur.

### RESUME DE L'INVENTION

En vue de la réalisation de ce but, on propose un boîtier définissant une enceinte dans laquelle sont disposés une carte mère et un haut-parleur relié à la carte mère.

Selon l'invention, une membrane du haut-parleur débouche dans au moins une ouverture ménagée dans un panneau supérieur du boîtier, et la carte mère s'étend dans un premier plan transversal du haut-parleur, ce premier plan étant sensiblement parallèle au panneau supérieur.

Le haut-parleur n'est ainsi pas agencé en dessous ou en dessus de la carte mère, mais au même niveau que celui de ladite carte mère, ce qui permet de limiter la hauteur du boîtier.

Qui plus est, en débouchant sur le panneau supérieur, le haut-parleur est dit orienté vers le haut. Une telle intégration du haut-parleur dans le boîtier ne nécessite pas d'éloigner le châssis du boîtier du support sur lequel il repose ou de décaisser une face inférieure dudit châssis d'une hauteur suffisante pour permettre une propagation des ondes sonores générées par le haut-parleur, ce qui permet également de limiter la hauteur du boîtier mais aussi de limiter le volume d'encombrement général de l'équipement électrique.

Selon une caractéristique de l'invention, le panneau supérieur est de forme rectangulaire, l'ouverture étant ménagée dans un coin du panneau supérieur.

Selon une autre caractéristique de l'invention, le haut-parleur comprend une embase de forme carrée s'étendant dans un deuxième plan sensiblement parallèle au panneau supérieur, aucun des bords de l'embase ne s'étendant parallèlement à un bord du panneau supérieur vu du deuxième plan.

Selon une caractéristique optionelle de l'invention, le boîtier comprend un châssis comportant des nervures comprenant une première série de nervures et une deuxième série de nervures qui s'étendent verticalement depuis un fond du châssis et qui sont respectivement disposées en partie centrale du fond du châssis et en périphérie de la partie centrale, la première série de nervures étant arrangée selon une structure en nid d'abeilles comprenant des alvéoles de forme hexagonale.

L'invention concerne également un boîtier décodeur comprenant un tel équipement électrique.

### BREVE DESCRIPTION DES DESSINS

L'invention sera mieux comprise à la lumière de la description qui suit, laquelle est purement illustrative et non limitative, et doit être lue en regard des dessins annexés, parmi lesquels :
[Fig. 1] la figure 1 est une vue en perspective, de dessus et depuis l'avant, d'un équipement électrique selon un mode de réalisation particulier de l'invention, dans une position nominale de fonctionnement ;
[Fig. 2] la figure 2 est une vue éclatée de l'équipement électrique illustré à la figure 1 ;
[Fig. 3] la figure 3 est une vue de dessous de l'équipement électrique illustré à la figure 1, dépourvu du châssis ;
[Fig. 4] la figure 4 est une vue en coupe transversale de l'équipement électrique illustré à la figure 1, dans un plan comprenant un axe central du haut-parleur ;
[Fig. 5] la figure 5 est une vue en perspective, de dessus et depuis un côté, du châssis de l'équipement électrique illustré à la figure 1 ; et
[Fig. 6] la figure 6 est une vue en perspective, de dessus et depuis un côté, du châssis et du haut-parleur de l'équipement électrique illustré à la figure 1.

### DESCRIPTION DETAILLEE DE L'INVENTION

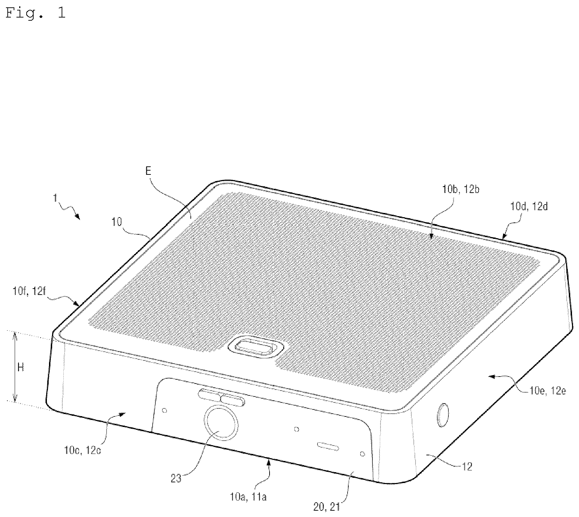

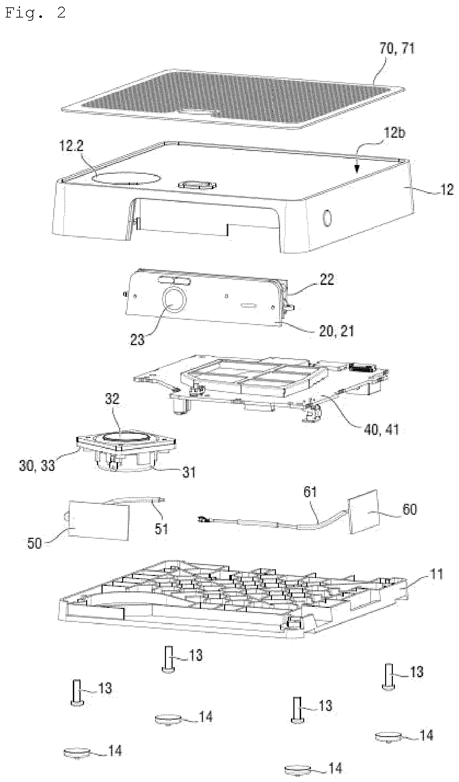

En référence aux figures 1 et 2, un boîtier décodeur généralement désigné en 1, selon un mode de réalisation particulier de l'invention, comprend un boîtier 10 définissant une enceinte E dans laquelle sont disposés un module électrique 20, un haut-parleur 30, une carte électronique principale ou carte mère 40, une première antenne 50 et une deuxième antenne 60. Le boîtier 10 est ici réalisé dans un matériau plastique et a une hauteur H sensiblement égale à 24 millimètres.

Le boîtier 10 est de forme globalement parallélépipèdique et comprend un châssis 11 surmonté d'un capot 12.

Le châssis 11 comprend un panneau inférieur 11a, de forme globalement rectangulaire, comprenant une face supérieure et une face inférieure formant une face inférieure 10a du boîtier 10.

Le capot 12 comprend un panneau supérieur 12b et une jupe ayant un bord supérieur reliée au pourtour du panneau supérieur 12b.

Le panneau supérieur 12b, de forme globalement rectangulaire, comprend une face supérieure formant une face supérieure 10b du boîtier 10, et une face inférieure formant un fond du capot 12.

La jupe a ses quatre coins arrondis et comprend :
- un panneau avant 12c relié à un bord avant du panneau supérieur 12b pour former une face avant 10c du boîtier 10 ;
- un panneau arrière 12d opposé au panneau avant 12c et relié à un bord arrière du panneau supérieur 12b pour former une face 10d arrière du boîtier 10 ;
- un panneau latéral droit 12e relié à un bord latéral du panneau supérieur 12b, à un bord latéral du panneau avant 12c et à un bord latéral du panneau arrière 12d pour former une face latérale 10e du boîtier 10 ; et
- un panneau latéral gauche 12f, opposé au panneau latéral droit 12e, relié à un bord latéral du panneau supérieur 12b, à un bord latéral du panneau avant 10a et à un bord latéral du panneau arrière 12d pour former une face latérale gauche 10f du boîtier 10.

Le boîtier décodeur 1, lorsqu'il se trouve dans sa position nominale de fonctionnement, est installé de sorte que le châssis 11 du boîtier 10 repose via quatre pieds 13 sur un support sensiblement horizontal (par exemple le meuble sur lequel est aussi posé le téléviseur auquel est connecté le boîtier décodeur 1), et que la face avant 10c du boîtier 10 se trouve face à l'utilisateur. Les pieds 13 sont reçus dans des plots de fixation 11.6 ménagés aux quatre coins du châssis 11 et sont ici munis de patins 14 formant des pointes de découplage de manière à limiter la transmission de vibrations générées par le haut-parleur 30 au support sur lequel repose le boîtier décodeur 1.

Ici, tous les termes de position tels que « avant », « arrière », « supérieur », « inférieur », « gauche », « droite », « horizontal » et « vertical » s'interprètent en considérant que le boîtier décodeur 1 se trouve dans sa position nominale de fonctionnement et est vu de face (comme s'il était vu par l'utilisateur).

En référence à la figure 2, le panneau avant 12c du capot 12 comprend, côté droit, une échancrure 12.1 (ou découpe) agencée pour recevoir le module électrique 20. L'échancrure 12.1, de forme globalement trapézoïdale, s'étend depuis un bord inférieur dudit panneau avant 12c et comprend des bords latéraux et un bord supérieur s'étendant au voisinage du bord avant du panneau supérieure 12b, sensiblement parallèlement à celui-ci.

Le module électrique 20 comprend un support 21 et une carte électronique 22 fixée au support 21.

Le support 21 présente une forme générale complémentaire à celle de l'échancrure 12.1 et est reçu dans l'échancrure 12.1 de sorte que ledit support 21 est en contact avec le bord supérieur et les bords latéraux de ladite l'échancrure 12.1. Le support 21 comprend une face avant 21c s'étendant dans le prolongement de la face avant 10c du boîtier 10, et une face arrière, opposé à la face avant 21c, de laquelle s'étend des plots de vissage de la carte électronique 22.

La carte électronique 22 comprend un circuit imprimé s'étendant sensiblement parallèlement au support et sur lequel sont montés une caméra, un récepteur infrarouge et un microphone. La caméra est disposée en regard d'un trou circulaire ménagé dans le support 21, le trou étant recouvert d'une vitre de protection 23 sensiblement affleurante à la face avant 10c du boîtier 10.

On notera que le support 21 est ici fabriqué dans une matière transparente ou translucide à la lumière infrarouge. Il s'agit par exemple d'une matière plastique de type polycarbonate ou MABS (pour méthacrylate de Méthyle-Acrylonitrile-Butadiène-Styrène).

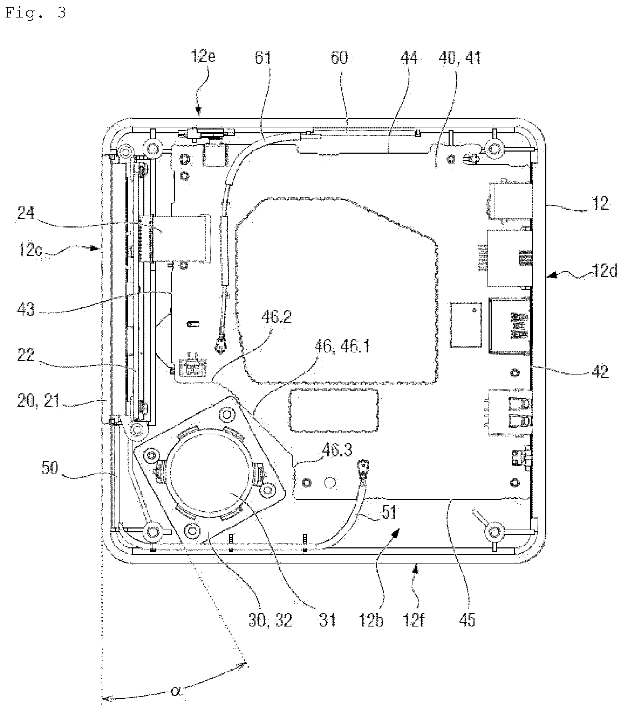

Comme illustré aux figures 2 et 3, le haut-parleur 30 est intégré dans le boîtier 10 et comprend, de manière connue en soi, un saladier 31 à l'intérieur duquel est montée mobile une bobine via un aimant, la bobine étant reliée coaxialement à une membrane 32 dont le déplacement induit des variations de pression acoustique générant des sons. Le saladier 31 a un axe central s'étendant sensiblement verticalement et comprend une embase 33 de forme carrée s'étendant horizontalement en regard du fond du capot 12 dans un plan P₃₃. L'axe central du saladier 31 est aussi celui du haut-parleur 30. L'embase 33 est pourvue à chaque coin d'un trou en regard d'un plot de vissage s'étendant verticalement en saillie du fond du capot 12, de sorte que le haut-parleur 30 est dit orienté vers le haut et est fixé à la face inférieure du panneau supérieur 12b du capot 12 via l'embase 33.

Le haut-parleur 30 est disposé dans un coin du capot 12 délimité par le panneau avant 12c et le panneau latéral gauche 12f. On notera qu'aucun des côtés droits de l'embase 33 du haut-parleur 30 ne s'étend ici parallèlement au panneau avant 12c ou au panneau latéral gauche 12f : le côté de l'embase 33 s'étendant au voisinage du panneau avant 12c et du panneau latéral gauche 12f forme, vu du plan P₃₃ horizontal, un angle α non nul et différent de 90 degrés avec le panneau avant 12c. L'angle α est ici sensiblement égal à 25 degrés. On comprend que l'ensemble des bords droits de l'embase 33 forment, avec les bords du panneau supérieur 12b, un angle différent de 0 degré et 90 degrés, de sorte qu'aucun desdits bords droits de l'embase 33 ne s'étend parallèlement à un bord dudit panneau supérieur 12b vu du plan P₃₃. Une telle orientation angulaire du haut-parleur 30 autour de son axe central permet notamment de limiter les dimensions en largeur et en longueur du boîtier 10.

Afin de permettre le débattement de la membrane 32 du haut-parleur 30, une ouverture 12.2 circulaire est ménagée dans le capot 12, coaxialement à la membrane 32. On dit que le haut-parleur 30 débouche dans l'ouverture 12.2. On notera que l'ouverture 12.2 a ici un diamètre supérieur à celui de la membrane 32 et inférieur au grand diamètre du saladier 31.

Comme illustré aux figures 2 à 4, la carte mère 40 est intégré dans le boîtier 10 et comprend un circuit imprimé 41 sur lequel sont montés des composants tels qu'un processeur, une mémoire et des connecteurs. Le circuit imprimé 41 s'étend sensiblement horizontalement dans un plan P₄₁ entre ledit châssis 11 et le panneau supérieur 12b du capot 12, et est vissé (et non clipé) audit panneau supérieur 12b du capot 12 via des plots de fixation s'étendant verticalement en saillie du fond du capot 12 de manière à limiter les mouvements relatifs entre la carte-mère 40 et le capot 12. Le circuit imprimé 41 a ici globalement la forme d'un rectangle dont un coin a été échancré pour recevoir en partie le haut-parleur 30. Le circuit imprimé 41 comprend :
- un bord arrière 42 s'étendant à proximité et parallèlement au panneau arrière 12d du capot 12 ;
- un bord avant 43, opposé au bord arrière 42, s'étendant à proximité et parallèlement au support 21 du module électrique 20 ;
- un bord latéral droit 44 s'étendant à proximité et parallèlement au panneau latéral 12e droit du capot 12, le bord latéral droit 44 reliant le bord arrière et le bord avant ;
- un bord latéral gauche 45, opposé au bord latéral droit 44, s'étendant à proximité et parallèlement au panneau latéral gauche 12f capot 12, le bord latéral gauche 45 étant relié au bord arrière ; et
- un bord d'échancrure 46 reliant le bord avant 43 et le bord latéral gauche 45 pour être horizontalement en regard du saladier 31 du haut-parleur 30.

Le bord d'échancrure 46 comprend une portion centrale 46.1, une première portion latérale 46.2 et une deuxième portion latérale 46.3. La première portion latérale 46.2 s'étend sensiblement perpendiculairement au bord avant 43 et relie ledit bord avant 43 à la portion centrale 46.1. La deuxième portion latérale 46.3 s'étend sensiblement perpendiculairement au bord latéral gauche 45 et relie ledit bord latéral gauche 45 à la portion centrale 46.1. La première portion latérale 46.2 et la deuxième portion latérale 46.3 ont une longueur sensiblement identique, la portion latérale s'étendant globalement à 45 degrés.

On comprend que le haut-parleur 30 n'est pas placée au-dessus ou en dessous de la carte mère 40 mais à côté de ladite carte mère 40.

Comme illustré aux figures 2 et 3, la première antenne 50 et la deuxième antenne 60 sont intégrées dans le boîtier 10.

La première antenne 50 s'étend parallèlement au panneau avant 12c du capot 12 et est plaquée contre celui-ci, en regard du haut-parleur 30. La première antenne 50 est connectée au circuit imprimé 41 de la carte mère 40 via un premier câble de connexion 51.

La deuxième antenne 60 s'étend parallèlement au panneau latéral droit 12e du capot 12 et est plaquée contre celui-ci, à proximité du milieu du bord latéral gauche du circuit imprimé 41 de la carte mère 40. La deuxième antenne 60 est connectée au circuit imprimé 41 de la carte mère 40 via un deuxième câble de connexion 61.

Le haut-parleur 30 et la carte électronique 22 du module électrique 20 sont quant à eux connectés au circuit imprimé 41 de la carte mère 40 via respectivement une nappe de connexion 24 et des câbles de connexion (non représentés).

Afin d'optimiser le volume d'encombrement global du boîtier 10, l'enceinte (E) délimitée par le châssis 11 et le capot 12 n'est pas isolée acoustiquement de sorte que le boîtier 10 ne forme pas une enceinte close pour le haut-parleur 30. Dès lors, le châssis 11 comprend des nervures comportant une première série de nervures 11.1 et une deuxième série de nervures 11.2 agencées pour limiter la résonnance acoustique à l'intérieur du boîtier 10 tout en améliorant la rigidité dudit châssis 11. La première série de nervures 11.1 et la deuxième série de nervures 11.2 s'étendent verticalement en saillie de la face supérieure du châssis 11 et ont ici une hauteur h sensiblement égale à 6,4 millimètres.

La première série de nervures 11.1 définit une structure en nid d'abeilles s'étendant en partie centrale du châssis 11. La structure en nid d'abeilles est globalement de forme carrée et comprend des alvéoles 11a de forme hexagonale permettant de casser les ondes stationnaires. Les alvéoles 11a sont disposées de part et d'autre de nervures 11.3 de renfort s'étendant chacune sensiblement selon une diagonale de la structure en nid d'abeilles. Les nervures de renfort 11.3 s'étendent chacune depuis une nervure centrale 11.4 de forme cylindrique située au centre du châssis 11, en direction de l'un des plots de fixation 11.6 recevoir les pieds 13.

La deuxième série de nervures 11.2 définit des cavités rectangulaires 11b s'étendant autour de la structure en nid d'abeilles, globalement à la périphérie du châssis.

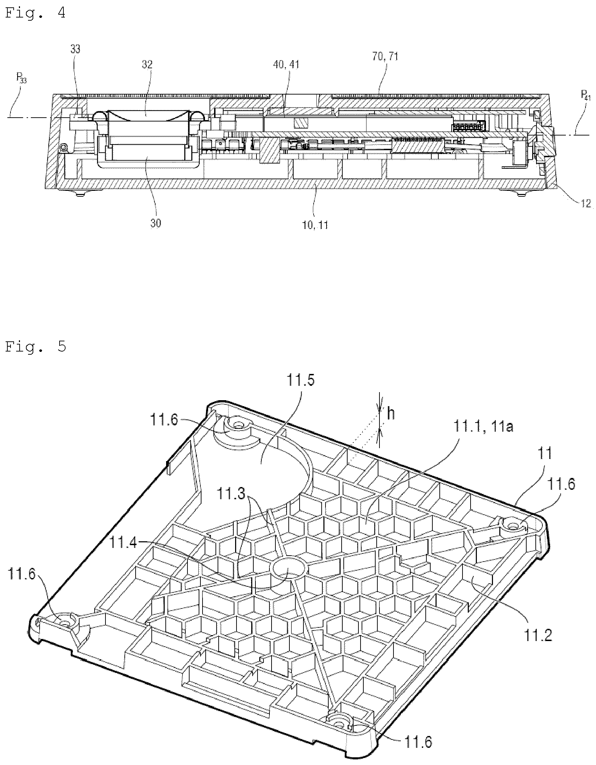

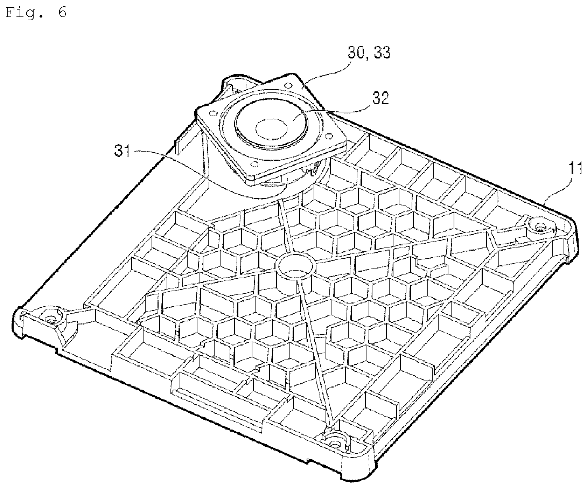

On notera que la première série de nervures 11.1 et la deuxième série de nervures 11.2 délimitent une zone de réception 11.5 d'une partie arrière du saladier 31 du haut-parleur 30 (figures 5 et 6), de sorte qu'aucune des nervures ne s'étend en dessous dudit fond du saladier 31 de manière à optimiser la hauteur H du boîtier 10.

Le panneau supérieur 12b capot 12 est revêtu d'un insert 70 agencé pour protéger le haut-parleur 30 des éléments extérieurs au boîtier 10, et dans une moindre mesure de la poussière. L'insert 70 comprend une plaque 71 pourvue d'une pluralité d'orifices équitablement répartis sur toute la surface de la plaque 71 pour former une grille de protection perméable aux ondes sonores. La plaque 71 comporte une face inférieure pourvue d'un tissu acoustique (non représenté) s'étendant sur toute la surface de la plaque 71 pour protéger le haut-parleur 30 de la poussière.

L'insert 70 est ici fixé sur le panneau supérieur 12b capot 12 par un adhésif double face. Un décaissement d'une hauteur sensiblement égale à 1 millimètre est aménagé sur la face supérieure 10b du boîtier 10 pour recevoir l'insert 70.

L'insert 70 permet également de masquer des défauts cosmétiques du panneau supérieur 12b liés au procédé d'injection plastique du capot 12, et en particulier des retassures générées lors du démoulage de fonctions techniques tels que les plots de fixations.

Bien entendu, l'invention n'est pas limitée au mode de réalisation décrit mais englobe toute variante entrant dans le champ de l'invention tel que défini par les revendications.

Le haut-parleur 30 peut être agencé ailleurs que dans un coin du capot 12 (dès lors qu'il reste orienté vers le haut). Le haut-parleur 30 peut par exemple être agencé au milieu du panneau supérieur 12b du capot 12.

La forme du boîtier 10 peut être différente de celle décrite et être par exemple cylindrique.

La première série de nervures 11.1 et la deuxième série de nervures 11.2 peuvent former des motifs différents de ceux décrits et/ou présenter une densité différente.

L'angle α d'inclinaison du haut-parleur 30 peut être nul et différent de 25 degrés.

L'ouverture circulaire 12.2 dans laquelle débouche le haut-parleur 30 peut être remplacée par une multitude d'orifices.

Seule la partie de l'insert 70 situé au-dessus du haut-parleur 30 doit être perméable aux ondes sonores. La répartition équitable des orifices de la plaque 71 et le recouvrement quasi total de la face inférieure de la plaque 71 par le tissu acoustique permet essentiellement d'améliorer l'uniformité visuelle du boîtier décodeur 1.

## Revendications

1. Equipement électrique (1) comprenant un boîtier (10) définissant une enceinte (E) dans laquelle sont disposés une carte mère (40) et un haut-parleur (30) relié à la carte mère, le haut-parleur comprenant une embase (33) de forme carrée et une membrane (32) débouchant dans au moins une ouverture (12.2) ménagée dans un panneau supérieur (12b) du boîtier, la carte mère s'étendant dans un premier plan (P₄₁) transversal du haut-parleur, ce premier plan étant sensiblement parallèle au panneau supérieur, équipement dans lequel l'embase (33) du haut-parleur s'étend dans un deuxième plan (P₃₃) sensiblement parallèle au panneau supérieur, aucun des bords de l'embase ne s'étendant parallèlement à un bord du panneau supérieur vu du deuxième plan, et le panneau supérieur (12b) est de forme rectangulaire, l'ouverture (12.2) étant ménagée dans un coin du panneau supérieur.

2. Equipement électrique (1) selon la revendication 1, dans lequel la carte mère (40) comprend un circuit imprimé (41) pourvu d'une échancrure (46) agencée pour recevoir au moins partiellement le haut-parleur (30).

3. Equipement électrique (1) selon l'une quelconque des revendications précédentes, dans lequel le haut-parleur (30) est fixé au panneau supérieur (12b).

4. Equipement électrique (1) selon l'une quelconque des revendications précédentes, dans lequel le boîtier comprend un châssis (11) comportant des nervures comprenant une première série de nervures (11.1) et une deuxième série de nervures (11.2) qui s'étendent verticalement depuis un fond du châssis et qui sont respectivement disposées en partie centrale du fond du châssis et en périphérie de la partie centrale, la première série de nervures étant arrangée selon une structure en nid d'abeilles comprenant des alvéoles (11a) de forme hexagonale.

5. Equipement électrique (1) selon la revendication 4, dans lequel la structure en nid d'abeilles est globalement de forme carrée et les alvéoles (11a) sont disposées de part et d'autre de nervures de renfort (11.3) s'étendant sensiblement chacune selon une diagonale de la structure en nid d'abeilles.

6. Equipement électrique (1) selon la revendication 5, dans lequel les nervures comprennent une nervure centrale (11.4) de forme cylindrique située au centre du châssis (11), le châssis comprenant quatre plots de fixation (11.6) destinés à recevoir chacun un pied (13) de l'équipement électrique, et les nervures de renfort (11.3) s'étendant chacune depuis la nervure centrale en direction de l'un des plots de fixation.

7. Equipement électrique (1) selon l'une des revendications 4 à 6, dans lequel les nervures délimitent une zone de réception (11.5) d'une partie arrière du haut-parleur (30).

8. Equipement électrique (1) selon l'une quelconque des revendications 4 à 7, dans lequel le boîtier (10) comporte un capot (12) surmontant le châssis (11), le capot comprenant le panneau supérieur (12b) et une jupe (12c, 12d, 12e, 12f) reliant le panneau supérieur audit châssis.

9. Equipement électrique (1) selon l'une quelconque des revendications précédentes, l'équipement électrique étant un boîtier décodeur.

## Patentansprüche

1. Elektrisches Gerät (1), das ein Gehäuse (10) umfasst, welches einen Hohlraum (E) begrenzt, in welchem eine Hauptplatine (40) und ein Lautsprecher (30), der an die Hauptplatine angeschlossen ist, angeordnet sind, wobei der Lautsprecher einen Sockel (33) von quadratischer Form und eine Membran (32) umfasst, welche in mindestens eine Öffnung (12.2) einmündet, die in einer oberen Platte (12b) des Gehäuses ausgespart ist, wobei die Hauptplatine sich in einer ersten Querebene (P₄₁) des Lautsprechers erstreckt, wobei diese erste Ebene im Wesentlichen parallel zur oberen Platte ist, wobei sich innerhalb des Geräts der Sockel (33) des Lautsprechers in einer zweiten Ebene (P₃₃) erstreckt, die im Wesentlichen parallel zur oberen Platte ist, wobei sich von der zweiten Ebene aus betrachtet keiner der Ränder des Sockels parallel zu einem Rand der oberen Platte erstreckt, und wobei die obere Platte (12b) von rechteckiger Form ist, wobei die Öffnung (12.2) in einer Ecke der oberen Platte ausgespart ist.

2. Elektrisches Gerät (1) nach Anspruch 1, wobei die Hauptplatine (40) einen Schaltkreis (41) umfasst, der mit einer Aussparung (46) versehen ist, die derart angeordnet ist, dass sie den Lautsprecher (30) zumindest teilweise aufnehmen kann.

3. Elektrisches Gerät (1) nach einem beliebigen der vorhergehenden Ansprüche, wobei der Lautsprecher (30) an der oberen Platte (12b) befestigt ist.

4. Elektrisches Gerät (1) nach einem beliebigen der vorhergehenden Ansprüche, wobei das Gehäuse ein Gestell (11) umfasst, welches Rippen aufweist, die eine erste Reihe von Rippen (11.1) und eine zweite Reihe von Rippen (11.2) umfassen, welche sich ausgehend von einem Boden des Gestells vertikal erstrecken und welche im mittigen Abschnitt des Bodens des Gestells beziehungsweise am Rand des mittigen Abschnitts angeordnet sind, wobei die erste Reihe von Rippen gemäß einer wabenförmigen Struktur angeordnet ist, welche Hohlräume (11a) von sechseckiger Form umfasst.

5. Elektrisches Gerät (1) nach Anspruch 4, wobei die wabenförmige Struktur insgesamt von quadratischer Form ist und die Hohlräume (11a) beiderseits von Verstärkungsrippen (11.3) angeordnet sind, welche sich jeweils entlang einer Diagonalen der wabenförmigen Struktur erstrecken.

6. Elektrisches Gerät (1) nach Anspruch 5, wobei die Rippen eine mittige Rippe (11.4) von zylindrischer Form umfassen, welche sich in der Mitte des Gestells (11) befindet, wobei das Gestell vier Befestigungsstifte (11.6) umfasst, die dazu bestimmt sind, jeweils ein Bein (13) des elektrischen Geräts aufzunehmen, und wobei die Verstärkungsrippen (11.3) sich jeweils von der mittigen Rippe in Richtung eines der Befestigungsstifte erstrecken.

7. Elektrisches Gerät (1) nach einem der Ansprüche 4 bis 6, wobei die Rippen einen Aufnahmebereich (11.5) eines hinteren Abschnitts des Lautsprechers (30) begrenzen.

8. Elektrisches Gerät (1) nach einem beliebigen der Ansprüche 4 bis 7, wobei das Gehäuse (10) einen Deckel (12) aufweist, der auf das Gestell (11) aufgesetzt ist, wobei der Deckel die obere Platte (12b) und eine Schürze (12c, 12d, 12e, 12f) umfasst, welche die obere Platte mit dem Gestell verbindet.

9. Elektrisches Gerät (1) nach einem beliebigen der vorhergehenden Ansprüche, wobei es sich bei dem elektrischen Gerät um eine Decoderbox handelt.

## Claims

1. Electrical equipment (1) comprising a casing (10) defining a chamber (*E*), wherein a motherboard (40) and a speaker (30) connected to the motherboard are disposed, the speaker comprising a square shaped base (33) and a membrane (32) opening into at least one opening (12.2) provided in an upper panel (12b) of the casing, the motherboard extending into a first transverse plane (P₄₁) of the speaker, this first plane being substantially parallel to the upper panel, wherein the base (33) of the speaker extends into a second plane (P₃₃) substantially parallel to the upper panel, none of the edges of the base extending parallel to an edge of the upper panel seen from the second plane, and the upper panel (12b) is rectangular-shaped, the opening (12.2) being provided in a corner of the upper panel.

2. Electrical equipment (1) according to claim 1, wherein the motherboard (40) comprises a printed circuit (41) provided with an indentation (46) arranged to receive the speaker (30), at least partially.

3. Electrical equipment (1) according to any one of the preceding claims, wherein the speaker (30) is fixed to the upper panel (12b).

4. Electrical equipment (1) according to any one of the preceding claims, wherein the casing comprises a chassis (11) comprising ridges comprising a first series of ridges (11.1) and a second series of ridges (11.2) which extend vertically from a bottom of the chassis and which are respectively disposed in the central part of the bottom of the chassis and at the periphery of the central part, the first series of ridges being arranged according to a honeycomb structure comprising hexagonal-shaped pits (11a).

5. Electrical equipment (1) according to claim 4, wherein the honeycomb structure is mainly square-shaped and the pits (11a) are disposed either side of reinforcing ridges (11.3) each extending substantially along a diagonal of the honeycomb structure.

6. Electrical equipment (1) according to claim 5, wherein the ridges comprise a cylindrical-shaped central ridge (11.4) located at the centre of the chassis (11), the chassis comprising four fixing studs (11.6) intended to each receive a foot (13) of the electrical equipment, and the reinforcing ridges (11.3) each extending from the central ridge in the direction of one of the fixing studs.

7. Electrical equipment (1) according to one of claims 4 to 6, wherein the ridges delimit a zone (11.5) for receiving a rear part of the speaker (30).

8. Electrical equipment (1) according to any one of claims 4 to 7, wherein the casing (10) comprises a cap (12) surmounting the chassis (11), the cap comprising the upper panel (12b) and a skirt (12c, 12d, 12e, 12f) connecting the upper panel to said chassis.

9. Electrical equipment (1) according to any one of the preceding claims, the electrical equipment being a set-top box.
